(19) Europäisches Patentamt

European Patent Office

Office européen des brevets

(11) **EP 4 254 567 B1**

(12) **EUROPEAN PATENT SPECIFICATION**

(45) Date of publication and mention
of the grant of the patent:
**12.03.2025  Bulletin 2025/11**

(21) Application number: **23165709.9**

(22) Date of filing: **30.03.2023**

(51) International Patent Classification (IPC):
*H01M 4/66* (2006.01)        *H01M 4/131* (2010.01)
*H01M 10/0525* (2010.01)

(52) Cooperative Patent Classification (CPC):
**H01M 4/667; H01M 4/131; H01M 4/668;
H01M 10/0525;** Y02E 60/10

(54) **ELECTRODE FOR NON-AQUEOUS ELECTROLYTE RECHARGEABLE BATTERY AND
NON-AQUEOUS ELECTROLYTE RECHARGEABLE BATTERY**

ELEKTRODE FÜR WIEDERAUFLADBARE BATTERIE MIT NICHTWÄSSRIGEM ELEKTROLYT UND
WIEDERAUFLADBARE BATTERIE MIT NICHTWÄSSRIGEM ELEKTROLYT

ÉLECTRODE POUR BATTERIE RECHARGEABLE À ÉLECTROLYTE NON AQUEUX ET BATTERIE
RECHARGEABLE À ÉLECTROLYTE NON AQUEUX

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **31.03.2022  JP 2022060935
16.02.2023  KR 20230020857**

(43) Date of publication of application:
**04.10.2023  Bulletin 2023/40**

(73) Proprietor: **Samsung SDI Co., Ltd.
Yongin-si, Gyeonggi-do 17084 (KR)**

(72) Inventor: **TASHIRO, Yuta
17084 Yongin-si, Gyeonggi-do (KR)**

(74) Representative: **Michalski Hüttermann & Partner
Patentanwälte mbB
Kaistraße 16A
40221 Düsseldorf (DE)**

(56) References cited:
**EP-A1- 2 988 351        CN-A- 111 710 832
US-A1- 2013 157 129**

**Description**

## BACKGROUND OF THE INVENTION

**(a) Field of the Invention**

The present invention relates to an electrode for a non-aqueous electrolyte rechargeable battery and a non-aqueous electrolyte rechargeable battery including the electrode.

**(b) Description of the Related Art**

Non-aqueous electrolyte rechargeable batteries including rechargeable lithium ion batteries are widely used as a power source for smart phones, notebook computers, and the like. As electronic devices are smaller and lighter, new high energy density is required for the rechargeable batteries. Nowadays, since a demand thereon also as a power source for electric vehicles or hybrid vehicles, etc. has been increased, the high energy density is required to secure equivalent performance to that of conventional gasoline engines.

One method of securing the high energy density of the rechargeable lithium ion batteries is to increase a loading amount of an electrode mixed material layer.

In general, the electrode mixed material layer is formed by coating and drying electrode mixed material slurry on a current collector foil, but when the loading amount of the electrode mixed material layer is increased, a binder may easily cause migration on the surface, so that the electrode mixed material layer may be easily peeled off or fall off from the current collector foil. Accordingly, the electrode mixed material layer with a large loading amount may be formed in another method of dry-mixing and kneading an electrode mixed material composition and making the electrode mixed material composition into a sheet with a calendering press, etc. and then, bonding the sheet to the current collector foil. Herein, in order to suppress the detachment or peeling of the electrode mixed material layer from the current collector foil, a method of disposing a base layer having conductivity between the current collector foil and the electrode mixed material layer has been considered as in Patent Document 1.

[Prior Art Document]

[Patent Document 1] International Publication No. 2020/196372

## SUMMARY OF THE INVENTION

Since the base layer is a layer neither including an electrode active material nor contributing to improving energy density of a battery, a thickness of the base layer should be thin in order to realize the high energy density. Since Patent Document 1 has not confirmed battery performance during the high-temperature storage when the electrode mixed material layer may easily be peeled off or fall off, a base layer sufficiently suppressing the detachment or peeling of the electrode mixed material layer during the high-temperature storage is required.

The present invention as a response to the aforementioned problems is to provide an electrode for a non-aqueous electrolyte rechargeable battery having a base layer being thin as much as possible and suppressing the detachment or peeling of the electrode mixed material layer during the high-temperature storage when the electrode mixed material layer is easily detached or peeled off.

An electrode for a non-aqueous electrolyte rechargeable battery according to an embodiment includes a current collector, an electrode mixed material layer, and a conductive base layer between the current collector and the electrode mixed material layer, wherein the base layer includes at least a styrene-acrylic acid ester-based copolymer, a carbon material, and polyacrylic acid, in the base layer, a content of the styrene-acrylic acid ester-based copolymer is greater than or equal to about 45 wt% and less than or equal to about 77.5 wt%, in the polyacrylic acid, a carboxy group is not neutralized or a ratio of a neutralized carboxy group neutralized by alkali metal ions among the carboxy groups is less than or equal to about 25 mol% based on 100 mol% of the carboxy groups, and a loading amount of the electrode mixed material layer per one surface of the current collector is greater than or equal to about 15 mg/cm$^2$ and less than or equal to about 70 mg/cm$^2$. The loading amount may be greater than or equal to about 25 mg/cm$^2$ and less than or equal to about 70 mg/cm$^2$, or greater than or equal to about 30 mg/cm$^2$ and less than or equal to about 50 mg/cm$^2$.

According to the electrode for a non-aqueous electrolyte rechargeable battery configured as described above, even in an electrode having a large loading amount of the electrode mixed material layer per one surface of the current collector, a thickness of the base layer is sufficiently reduced to a range capable of achieving a desired high energy density. Even in this case, detachment or peeling of the electrode mixed material layer may be sufficiently suppressed.

In an embodiment, the base layer may have a thickness of greater than or equal to about 0.5 $\mu$m and less than or equal to about 5 μm. The thickness of the base layer is more desirably greater than or equal to about 0.5 μm and less than or equal to about 2 μm, and particularly desirably greater than or equal to about 0.5 μm and less than or equal to about 1.5 μm.

The styrene-acrylic acid ester-based copolymer may have a glass transition temperature of greater than or equal to about -20 °C and less than or equal to about 15 °C.

In order to realize the aforementioned loading amount of the electrode mixed material layer, it is desirable that the electrode mixed material layer includes greater than or equal to about 0.5 wt% and less than or equal to about 10 wt% of polytetrafluoroethylene.

It is more desirable that the polyacrylic acid has no neutralized carboxy group, or that the ratio of the neutralized carboxy group in the polyacrylic acid may be greater than about 0% and less than or equal to about 10%.

In the base layer, a content of the styrene-acrylic acid ester-based copolymer may be greater than or equal to about 50 wt% and less than or equal to about 75 wt%.

In an embodiment, the styrene-acrylic acid ester-based copolymer may be a styrene-butyl acrylate-based copolymer and/or a styrene-2-ethylhexyl acrylate-based copolymer.

The carbon material may include at least one of furnace black, channel black, thermal black, ketjen black, and acetylene black.

Another embodiment provides a non-aqueous electrolyte rechargeable battery including the positive electrode and the negative electrode, a separator between the positive electrode and the negative electrode, and an electrolyte.

By increasing the loading amount of the positive electrode mixed material layer and reducing the thickness of the base layer as much as possible, high energy density of the non-aqueous electrolyte rechargeable battery is achieved, and at the same time, detachment or peeling of the positive electrode mixed material layer may be sufficiently suppressed.

## DETAILED DESCRIPTION OF THE EMBODIMENTS

Hereinafter, a specific configuration of a rechargeable battery according to an embodiment will be described.

<Basic Configuration of Non-aqueous Electrolyte Rechargeable Battery>

A non-aqueous electrolyte rechargeable battery according to an embodiment is a rechargeable lithium ion battery including a positive electrode, a negative electrode, separator, and a non-aqueous electrolyte. The shape of the rechargeable lithium ion battery is not particularly limited, but may be any shape such as a cylindrical shape, a prismatic shape, a laminated shape, or a button shape.

(1-1. Positive Electrode)

The positive electrode includes a positive electrode current collector and a positive electrode mixed material layer formed on the positive electrode current collector. The positive electrode current collector may be any conductor, for example, in a plate shape or thin shape, and is desirably made of aluminum, stainless steel, or nickel-plated steel. The positive electrode mixed material layer may include at least a positive electrode active material, and may further include a conductive agent and a positive electrode binder.

The positive electrode active material may be, for example, a transition metal oxide or a solid solution oxide containing lithium, and is not particularly limited as long as it can electrochemically intercalate and deintercalate lithium ions. Examples of the transition metal oxide including lithium may include $Li_{1.0}Ni_{0.88}C0_{0.1}Al_{0.01}Mg_{0.01}O_2$ and the like, but besides these, may include Li·Co-based composite oxides such as $LiCoO_2$, Li·Ni·Co·Mn-based composite oxides such as $LiNi_xCo_yMn_zO_2$, Li·Ni-based composite oxides such as $LiNiO_2$, or Li·Mn-based composite oxides such as $LiMn_2O_4$. Examples of the solid solution oxide may include $Li_aMn_xCo_yNi_zO_2$ ($1.150 \leq a \leq 1.430$, $0.45 \leq x \leq 0.6$, $0.10 \leq y \leq 0.15$, $0.20 \leq z \leq 0.28$), $LiMn_{1.5}Ni_{0.5}O_4$, and the like. On the other hand, a content (content ratio) of the positive electrode active material is not particularly limited, as long as it is applicable to the positive electrode mixed material layer of the non-aqueous electrolyte rechargeable battery. Moreover, these compounds may be used independently or a plurality of types may be mixed and used.

The conductive agent is not particularly limited as long as it is for increasing the conductivity of the positive electrode. Specific examples of the conductive agent may include, for example, those containing at least one selected from carbon black, natural graphite, artificial graphite, fibrous carbon, and a nanocarbon material. Examples of the carbon black include furnace black, channel black, thermal black, ketjen black, and acetylene black. Examples of the fibrous carbon include carbon fibers and the like. Examples of the nanocarbon material may include carbon nanotubes, carbon nanofibers, single-layer graphene, and multi-layer graphene. A content of the conductive agent is not particularly limited, and any content applicable to the positive electrode mixed material layer of a non-aqueous electrolyte rechargeable battery may be used.

Examples of the positive electrode binder may include a fluorine-containing resin such as polytetrafluoroethylene (PTFE) and polyvinylidene fluoride, an ethylene-containing resin such as a styrene-butadiene rubber, an ethylene-propylene-diene terpolymer, an acrylonitrile-butadiene rubber, a fluororubber, polyvinyl acetate, polymethylmethacrylate, polyethylene, polyvinyl alcohol, carboxymethyl cellulose, a carboxymethyl cellulose derivative (a salt of carboxymethyl cellulose, etc.), or nitrocellulose.

The positive electrode binder is not particularly limited as long as it can bind the positive electrode active material and the conductive agent on the positive electrode current collector, but from the viewpoint of increasing the loading amount of the positive electrode material layer, it is desirable that the positive electrode mixed material layer includes a fluorine-containing resin such as polytetrafluoroethylene (PTFE) or polyvinylidene fluoride as a binder, and the content of the binder in the positive electrode mixed material layer may be desirably greater than or equal to about 0.5 parts by weight and less than or equal to about 10 parts by weight. When the content of the binder is within the above range, the mechanical strength of the positive electrode mixture layer is improved to the extent that good processability may be secured, and the energy density of the positive electrode plate may be increased.

(1-2. Negative Electrode)

The negative electrode includes a negative electrode current collector and a negative electrode mixed material layer on the negative electrode current collector. The negative electrode current collector may be any conductor, for example, may have a plate shape or thin shape, and may be desirably made of copper, stainless steel, or nickel-plated steel.

The negative electrode mixed material layer includes at least a negative electrode active material, and may further include a conductive agent and a negative electrode binder. The negative electrode active material is not particularly limited as long as it can electrochemically intercalate and deintercalate lithium ions, but, may be, for example, a graphite active material (artificial graphite, natural graphite, a mixture of artificial graphite and natural graphite, natural graphite coated with artificial graphite) etc.), a Si-based active material or a Sn-based active material (for example, a mixture or composite of fine particles of silicon (Si), tin (Sn), or oxides thereof and graphite active material, fine particles of silicon or tin, or alloys using silicon or tin as a base material), metal lithium, and titanium oxide compounds such as $Li_4Ti_5O_{12}$, lithium nitride. As the negative electrode active material, one type of the above may be used, or two or more types may be used in combination. On the other hand, oxides of silicon are represented by $SiO_x$ ($0 \leq x \leq 2$).

The conductive agent is not particularly limited as long as it is for increasing the conductivity of the negative electrode, and for example, the same as those described in the positive electrode section may be used.

The negative electrode binder may be one capable of binding the negative electrode active material and the conductive agent onto the negative electrode current collector, and is not particularly limited. The negative electrode binder may be, for example, polyvinylidene fluoride (PVDF), polytetrafluoroethylene (PTFE), polyacrylic acid (PAA), a styrene butadiene-based copolymer (SBR), a metal salt of carboxymethylcellulose (CMC) etc. One type of binder may be used alone or two or more types may be used.

(1-3. Separator)

The separator is not particularly limited, and any separator may be used as long as it is used as a separator for a rechargeable lithium ion battery. As the separator, it is desirable to use a porous film, non-woven fabric, or the like that exhibits excellent high-rate discharge performance alone or in combination. The resin constituting the separator may be, for example, a polyolefin-based resin such as polyethylene, polypropylene, etc., a polyester resin such as polyethylene terephthalate, polybutylene terephthalate, etc., polyvinylidene difluoride, a vinylidene difluoride-hexafluoropropylene copolymer, a vinylidene difluorideperfluorovinylether copolymer, a vinylidene difluoride-tetrafluoroethylene copolymer, a vinylidene difluoride-trifluoroethylene copolymer, a vinylidene difluoride-fluoroethylene copolymer, a vinylidene difluoride-hexafluoroacetone copolymer, a vinylidene difluoride-ethylene copolymer, a vinylidene difluoridepropylene copolymer, a vinylidene difluoride-trifluoro propylene copolymer, a vinylidene difluoride-tetrafluoroethylene copolymer, a vinylidene difluoride-ethylene-tetrafluoroethylene copolymer.

On the other hand, the porosity of the separator is not particularly limited, and it is possible to arbitrarily apply the porosity possessed by the separator of the conventional rechargeable lithium ion battery.

On the surface of the separator, there may be a heat-resistant layer containing inorganic particles for improving heat resistance, or a layer containing an adhesive for adhering to electrodes to fix battery elements. Examples of the aforementioned inorganic particles include $Al_2O_3$, AlOOH, $Mg(OH)_2$, $SiO_2$, and the like. Examples of the adhesive include a vinylidene difluoride-hexafluoropropylene copolymer, an acid-modified product of vinylidene difluoride polymers, and a styrene-(meth)acrylic acid ester copolymer.

(1-4. Non-aqueous Electrolyte)

As the non-aqueous electrolyte, the same non-aqueous electrolyte that has conventionally been used for rechargeable lithium ion batteries may be used without particular limitation. The non-aqueous electrolyte has a composition in which an electrolyte salt is included in a non-aqueous solvent, which is a solvent for the electrolyte. Examples of the non-aqueous solvent may include cyclic carbonate esters such as propylene carbonate, ethylene carbonate, butylene carbonate, chloroethylene carbonate, fluoroethylene carbonate, and vinylene carbonate, cyclic esters such as $\gamma$-butyrolactone and $\gamma$-valerolactone, chain carbonates such as dimethyl carbonate, diethyl carbonate, or ethylmethyl carbonate, chain esters such as methylformate, methylacetate, methylbutyrate, ethyl propionate, propyl propionate, ethers such as tetrahydrofuran or a derivative thereof, 1,3-dioxane, 1,4-dioxane, 1,2-dimethoxyethane, 1,4-dibutoxyethane, methyldiglyme, ethylene glycol monopropyl ether, or propylene glycol monopropyl ether, nitriles such as acetonitrile and benzonitrile, dioxolane or a derivative thereof, ethylene sulfide, sulfolane, sultone, or a derivative thereof, which may be used alone or in a mixture of two or more. On the other hand, when two or more types of non-aqueous solvents are mixed and used, a mixing ratio of each non-aqueous solvent may be a mixing ratio that may be used in a conventional rechargeable lithium ion battery.

Examples of the electrolyte salt may include an inorganic ion salt including one of lithium (Li), sodium (Na) or potassium (K) such as $LiClO_4$, $LiBF_4$, $LiAsF_6$, $LiPF_6$, $LiPF_{6-x}(C_nF_{2n+1})_x$ [provided that $1<x<6$, $n=1$ or $2$], LiSCN, LiBr, LiI, $Li_2SO_4$, $Li_2B_{10}Cl_{10}$, $NaClO_4$, NaI, NaSCN, NaBr, $KClO_4$, KSCN, $NaClO_4$, NaI, NaSCN, NaBr, $KClO_4$, KSCN, an organic ion salt such as $LiCF_3SO_3$, $LiN(CF_3SO_2)_2$, $LiN(C_2F_5SO_2)_2$, $LiN(CF_3SO_2)(C_4F_9SO_2)$, $LiC(CF_3SO_2)_3$, $LiC(C_2F_5SO_2)_3$, $(CH_3)_4NBF_4$, $(CH_3)_4NBr$, $(C_2H_5)_4NClO_4$, $(C_2H_5)_4NI$, $(C_3H_7)_4NBr$, $(n-C_4H_9)_4NClO_4$, $(n-C_4H_9)_4NI$, $(C_2H_5)_4N$-maleate, $(C_2H_5)_4N$-benzoate, $(C_2H_5)_4N$-phtalate, stearyl lithium sulfonate, octyl lithium sulfonate, dodecylbenzene lithium sulfonate, and the like, and it is also possible to use these ionic compounds alone or in a mixture of two or more types. Meanwhile, a concentration of the electrolyte salt may be the same as that of a non-aqueous electrolyte used in a conventional rechargeable lithium ion battery, and is not particularly limited. In an embodiment, it is desirable to use a non-aqueous electrolyte containing the above-described lithium compound (electrolyte salt) at a concentration of greater than or equal to about 0.8 mol/L and less than or equal to about 1.5 mol/L.

Meanwhile, various additives may be added to the non-aqueous electrolyte. Examples of such additives may include negative electrode-acting action additives, positive electrode-acting additives, ester additives, carbonate ester additives, sulfuric acid ester additives, phosphoric acid ester additives, boric acid ester additives, acid anhydride additives, and electrolyte additives. One of these may be added to the non-aqueous electrolyte, and a plurality of types of additives may be added.

<2. Characteristic Configuration of Non-aqueous Electrolyte Rechargeable Battery According to an Embodiment >

Hereinafter, the characteristic configuration of the non-aqueous electrolyte rechargeable battery according to an embodiment will be described.

(2-1. Base Layer)

The aforementioned positive electrode also has a base layer. The base layer is provided between the positive electrode current collector and the positive electrode mixed material layer, and prevents the positive electrode mixed material layer from being detached or peeled off.

The base layer may include a carbon material, a binder (base layer binder), and a dispersant. The carbon material is not particularly limited as long as it is for increasing the conductivity of the base layer. Specific examples of the carbon material may include at least one selected from carbon black, natural graphite, artificial graphite, fibrous carbon, and nanocarbon materials. Examples of the carbon black may include furnace black, channel black, thermal black, ketjen black, and acetylene black. Examples of the fibrous carbon may include a carbon fiber and the like. Examples of the nanocarbon material may include carbon nanotubes, carbon nanofibers, single-layer graphene, and multi-layer graphene. Among carbon materials, it is desirable to use carbon black, which is easy to be dispersed. Among carbon blacks, it is more desirable to use acetylene black having high conductivity. A content of the carbon material in the base layer is desirably greater than or equal to about 17 wt% and less than or equal to about 35 wt%, more desirably greater than or equal to about 21 wt% and less than or equal to about 32 wt%. When the content of the carbon material is greater than or equal to about 17 wt%, the conductivity of the base layer is good, and when the content is greater than or equal to about 21 wt%, the conductivity of the base layer is better. Since the content of the aforementioned binder or dispersant for the base layer increases when the content of the carbon material is lowered, the base layer leads to good adhesion or improved dispersibility. For this reason, the content of the carbon material is desirably less than or equal to about 35 wt%, and more desirably less than or equal to about 32 wt%.

The binder for the base layer binds each component such as a carbon material included in the base layer to each other, and at the same time binds the base layer and the positive electrode current collector or the positive electrode mixed material layer. Specifically, the binder for the base layer according to an embodiment may be a styrene-acrylic acid ester-based copolymer. The styrene-acrylic acid ester-based copolymer refers to a copolymer formed by polymerizing styrene and acrylic acid ester as a main unit, and for example, may be a copolymer including structural units of styrene and acrylic acid ester in the range of greater than or equal to about 80 wt% and less than or equal to about 99 wt%. The acrylic acid ester may include methyl acrylate, ethyl acrylate, butyl acrylate, isopropyl acrylate, octyl acrylate, 2-ethylhexyl acrylate, isobutyl acrylate, pentyl acrylate, n-hexyl acrylate, isoamyl acrylate, lauryl acrylate, stearyl acrylate, isobornyl acrylate, 2-hydroxyethyl acrylate, 2-hydroxypropyl acrylate, 2-hydroxybutyl acrylate, 2-hydroxy-3-phenoxypropyl acrylate, 2-acryloxyethyl-2-hydroxyethyl-phthalate, ethoxy-diethylene glycol acrylate, methoxy-triethylene glycol acrylate, tetrahydrofurfuryl acrylate, phenoxy-polyethylene glycol acrylate, phenoxy diethylene glycol acrylate, phenoxyethyl acrylate, methoxyethyl acrylate, glycidyl acrylate, acrylonitrile, 2-acrylamide-2-methylpropanesulfonic acid, 2-acryloxyethyl phosphate; and the like, and desirably butyl acrylate and 2-ethylhexyl acrylate.

The styrene-acrylic acid ester-based copolymer may include structural units other than styrene and acrylic acid ester in an amount of greater than or equal to about 1 wt% and less than or equal to about 20 wt%. The structural units that the styrene-acrylic acid ester-based copolymer may contain may include structural units when aromatic vinyl compounds such as p-methylstyrene, m-methylstyrene, o-methylstyrene, o-t-butyl styrene, m-t-butyl styrene, p-t-butyl styrene, p-chloro styrene, o-chloro styrene, are polymerized; and structural units obtained by polymerization of unsaturated methacrylic acid alkyl ester compounds such as methyl methacrylate, ethyl methacrylate, butyl methacrylate, isopropyl methacrylate, octyl methacrylate, 2-ethylhexyl methacrylate, isobutyl methacrylate, pentyl methacrylate, n-hexyl methacrylate, isoamyl methacrylate, lauryl methacrylate, stearyl methacrylate, and isobornyl methacrylate; (meth)acrylic acid compounds such as methacrylic acid, acrylic acid, itaconic acid, fumaric acid, and maleic acid; unsaturated carboxylic acid amide compounds such as (meth)acrylamide, (meth)N-methyl acrylamide, (meth)N-dimethyl acrylamide, (meth)N-hydroxymethyl acrylamide, (meth)N-butoxymethylacrylamide, and (meth)isobutoxymethyl acrylamide; in addition, 2-hydroxyethyl methacrylate, 2-hydroxypropyl methacrylate, 2-hydroxybutyl methacrylate, 2-hydroxy-3-phenoxypropyl methacrylate, ethoxy-diethylene glycol methacrylate, methoxy-triethylene glycol methacrylate, tetrahydrofurfuryl methacrylate, phenoxy-polyethylene glycol methacrylate, phenoxydiethylene glycol methacrylate, phenoxyethyl methacrylate, methoxylethyl, glycidyl methacrylate, methacrylonitrile, and 2-methchlorooxyethyl phosphate.

The glass transition temperature of the styrene-acrylic acid ester-based copolymer may be desirably less than or equal to about 30 °C, and desirably greater than or equal to about -20 °C. When the glass transition temperature is within this range, good adhesion may be obtained even when the positive electrode mixture layer is bonded to the base layer without setting the temperature of the hot roll press to an excessively high temperature, such as exceeding about 100°C. The glass transition temperature of the styrene-acrylic acid ester-based copolymer is more desirably greater than or equal to about - 20 °C and less than or equal to about 15 °C, or greater than or equal to about - 15 °C and less than or equal to about 15 °C, and particularly desirably greater than or equal to about -10 °C and less than or equal to about 15 °C. The glass transition temperature of the styrene-acrylic acid ester-based copolymer may be controlled by the type and content of the constituent units of the copolymer. Since the styrene-acrylic acid ester-based copolymer includes greater than or equal to about 80 wt% and less than or equal to about 99 wt% of structural units obtained by polymerizing styrene and acrylic acid ester, it may be adjusted by the contents of styrene and acrylic acid ester. For example, since the glass transition temperature of a homopolymer of styrene is about 100 °C and the glass transition temperature of a homopolymer of 2-ethylhexyl acrylate is about -55 °C, a copolymer having a glass transition temperature between about -55 °C and about 100 °C may be synthesized by adjusting the contents of styrene and 2-ethylhexyl acrylate. In addition, if the glass transition temperature of the homopolymer of the monomer to be used is known, the calculated glass transition temperature may be obtained from a volume fraction of the monomer compound using Fox's equation, the copolymer may be synthesized while referring to it, and differential scanning calorimetry (DSC) is performed to obtain a styrene-acrylic acid ester-based copolymer having a glass transition temperature of greater than or equal to about -20 °C and less than or equal to about 15 °C.

It is desirable that the content of the binder for the base layer in the base layer is greater than or equal to about 45 wt% in order to sufficiently prevent detachment or peeling of the positive electrode mixed material layer by the base layer. Further, in order to sufficiently secure conductivity of the base layer, the content of the binder for the base layer in the base layer may be desirably less than or equal to about 77.5 wt%. The content of the binder for the base layer in the base layer is more desirably greater than or equal to about 50 wt% and less than or equal to about 75 wt%, and particularly desirably greater than or equal to about 55 wt% and less than or equal to about 70 wt%, or greater than or equal to about 60 wt% and less than or equal to about 70 wt%.

The dispersant is for uniformly dispersing the aforementioned carbon material and the binder for the base layer, and in an embodiment, polyacrylic acid corresponds to it. The polyacrylic acid has a plurality of carboxy groups in its molecule, and these carboxy groups are sometimes neutralized by alkali metal ions such as sodium ions. It is desirable that the polyacrylic acid used in an embodiment is one in which the carboxy group is not neutralized as much as possible. Specifically, among the carboxyl groups of polyacrylic acid, a ratio of neutralized carboxyl groups (neutralized carboxy groups) may be desirably less than or equal to about 25 mol%, or less than or equal to about 20 mol%, more desirably less than or equal to about 10 mol%, and particularly desirably 0 mol% (i.e., unneutralized) based on 100 mol% of the carboxy groups. The content of the dispersant in the base layer may be desirably greater than or equal to about 7 wt% and less than or equal to about 15 wt%, and more desirably greater than or equal to about 9 wt% and less than or equal to about 14 wt%. When the content of the dispersant is greater than or equal to about 7 wt%, the aforementioned carbon material and the binder for the base layer may be uniformly dispersed, and when the content is greater than or equal to about 9 wt%, they may be more uniformly dispersed. On the other hand, if the content of the dispersant is reduced, the content of the binder for the base layer or the conductive agent may be increased, which leads to the expression of good adhesion of the base layer or the improvement of battery performance due to low resistance. For this reason, it is desirable that the content of the dispersant is less than or equal to about 15 wt%, and more desirably less than or equal to about 14 wt%.

<3. Manufacturing Method of Non-aqueous Electrolyte Rechargeable Battery According to an Embodiment>

Hereinafter, the manufacturing method of a rechargeable lithium ion battery is described.

(3-1. Manufacturing method of Positive Electrode)

A positive electrode according to an embodiment is manufactured as follows. First, a base layer is formed by suspending each component in a solvent such as water and the like to prepare base layer slurry and then, coating and drying the base layer slurry on a positive electrode current collector. Herein, a coating amount of the base layer slurry is adjusted to have a base layer thickness of for example, greater than or equal to about 0.5 $\mu$m to less than or equal to about 5 $\mu$m after the drying. The base layer thickness after the drying may be desirably greater than or equal to about 0.5 $\mu$m and less than or equal to about 2 $\mu$m and particularly desirably, greater than or equal to about 0.5 $\mu$m and less than or equal to about 1.5 $\mu$m. On the other hand, a method of the coating has no particular limitation. The coating method may be, for example, a knife coater method, a gravure coater method, a reverse roll coater method, a slit die coater method, and the like. Each coating process described below is equally performed.

Subsequently, a positive electrode active material, a conductive agent, and a positive electrode binder are mixed in a desired ratio and kneaded to prepare a lump of a positive electrode mixed material and compressing this positive electrode mixed material lump into a positive electrode mixed material sheet. This positive electrode mixed material sheet is laminated on the base layer by a hot roll press and the like, manufacturing a positive electrode. On the other hand, an apparatus used in the process of laminating the positive electrode mixed material sheet on the base layer in the dry method has no particular limitation. The apparatus used for the process of laminating the positive electrode mixed material sheet on the base layer may be a roll press, a hot roll press device, a dry laminator, a calender processing device, a heat press device, etc. In the laminating process, for example, when the hot roll press is used, a press roll temperature of the hot roll press device may be appropriately changed depending on materials used for the positive electrode mixed material and the like but desirably greater than or equal to about 20 °C and less than or equal to about 150 °C, desirably greater than or equal to about 30 °C and less than or equal to about 120 °C, and particularly desirably greater than or equal to about 40 °C and less than or equal to about 80 °C. In addition, a rotation speed of the press roll may be desirably greater than or equal to about 0.1 m/min and less than or equal to about 10 m/min, more desirably, greater than or equal to about 0.1 m/min and less than or equal to about 5 m/min, and particularly desirably, greater than or equal to about 0.1 m/min and less than or equal to about 1.0 m/min. Since various parameters such as the temperature or the rotation speed of the press roll may have different desirable ranges depending on an available hot roll press device, the parameters may be adjusted depending on each hot roll press device.

In the lamination of the positive electrode mixed material sheet, the loading amount of the positive electrode mixed material layer per one surface of the positive electrode current collector is adjusted into greater than or equal to about 15 mg/cm$^2$ and less than or equal to about 70 mg/cm$^2$. The loading amount of the positive electrode mixed material layer per one surface of the positive electrode current collector is desirably greater than or equal to about 25 mg/cm$^2$ and less than or equal to about 70 mg/cm$^2$ and particularly desirably, greater than or equal to about 30 mg/cm$^2$ and less than or equal to about 50 mg/cm$^2$.

(3-2. Manufacturing method of Negative Electrode)

First, materials for forming a negative electrode mixed material layer are mixed and then, dispersed in a solvent for negative electrode slurry, preparing negative electrode slurry. Subsequently, the negative electrode slurry is coated and dried on a negative electrode current collector, forming a negative electrode mixed material layer. The negative electrode mixed material layer is pressed to have desired density. Accordingly, a negative electrode is manufactured.

(3-3. Manufacturing method of Non-aqueous Electrolyte Rechargeable Battery)

Subsequently, a separator is interposed between the positive and negative electrodes, manufacturing an electrode body. The electrode body is processed to have a desired shape (for example, cylindrical, prismatic, laminated, button-type, and the like) and then inserted into a container with the same shape as the electrode body. Subsequently, a non-aqueous electrolyte is inserted into the corresponding container to impregnate the electrolyte into each pore in the separator or a gap between the positive and negative electrodes. Accordingly, a rechargeable lithium ion battery is manufactured.

<4. Effect by an Embodiment>

The non-aqueous electrolyte rechargeable battery configured as described above may achieve high energy density and simultaneously, sufficiently suppress the detachment or peeling of the positive electrode mixed material layer by increasing the loading amount of the positive electrode mixed material layer and in addition, reducing the thickness of the base layer.

<5. Another Embodiment of the Present Invention>

The present invention is not limited to the aforementioned embodiment. In the aforementioned example, the base layer is formed only on one surface of the positive electrode current collector, but the base layer and the positive electrode mixed layer may be formed on both sides of the positive electrode current collector. The embodiment illustrates a case of disposing the base layer between the positive electrode current collector and the positive electrode mixed material layer, but the base layer according to the present invention may be disposed between negative electrode current collector and negative electrode mixed material layer to suppress detachment or peeling of the negative electrode mixed material layer. The base layer according to the present invention may not be limited to a non-aqueous electrolyte rechargeable battery having no solid electrolyte layer but applied to a semi-solid rechargeable battery or an all-solid rechargeable battery and the like having a solid electrolyte layer. In addition, the present invention is not limited to these embodiments but may be variously modified without deviating from the purpose.

[Examples]

Hereinafter, the present invention will be described in more detail according to specific examples. However, the following examples are only one example of the present invention, and the present invention is not limited to the following examples.

<Preparation of Base Layer Slurry>

First, Dispersions 1 to 5 below were prepared and then, used to prepare Base layer slurry 1 to 37. Types of a dispersant used in preparing each dispersion are shown in Table 1 below, and a composition of each dispersion is shown in Table 2. In addition, types of a binder used in each base layer slurry are shown in Table 3, and a composition of each base layer slurry is shown in Table 4 below. Base layer slurries 36 and 37 were prepared in the same manner as Base layer slurry 9 of Table 4 except that a glass transition temperature of a binder for a base layer was different. Base layer slurry 36 used (B-4) shown in Table 3-2 as a binder for a base layer. In addition, Base layer slurry 37 used (B-5) shown in Table 3-2 as a binder for a base layer.

(Preparation of Dispersion 1)

70.0 g of acetylene black, 150 g of an aqueous solution including 20.0wt% of Dispersant (A-1) (a mass of solids was 30 g when water was removed from the aqueous solution), and 1030 g of water were mixed by using a disper (i.., a highspeed mixer) at 3000 rpm for 20 minutes. The mixture was subjected to a high-pressure dispersion treatment under a pressure of 80 MPa by using NanoVator manufactured by Yoshida Kogyo Machinery Co., Ltd. The high-pressure dispersion treatment was three times repeated to obtain acetylene black dispersion (Dispersion 1). As a result of drying and weighing Dispersion 1, a content (solid concentration) of a dried material in the dispersion was about 8 wt%.

(Preparation of Dispersions 2 to 4)

Dispersions 2 to 4 were prepared in the same manner as in Dispersion 1 except that Dispersant A-1 used in Dispersion 1 was changed into Dispersant A-2, A-3, or A-4.

(Preparation of Dispersion 5)

70.0 g of acetylene black, 600 g of an aqueous solution of 5.0wt% of Dispersant A-5 (a mass of a solid was 30 g when water was removed from the aqueous solution), and 580 g of water were mixed by using a disper at 3000 rpm for 20 minutes. The mixture was subjected to a high-pressure dispersion treatment under a pressure of 80 MPa by using NanoVator manufactured by Yoshida Kogyo Machinery Co., Ltd. The high-pressure dispersion treatment was three times repeated to obtain acetylene black dispersion (Dispersion 5). As a result of drying and weighing Dispersion 5, a content (solid concentration) of a dried material in the dispersion was about 8 wt%

(Table 1)

| Dispersant | Resin | Neutralization degree (%) | Neutralization ion |
|---|---|---|---|
| (A-1) | polyacrylic acid | 0 | - |
| (A-2) | partially neutralized polyacrylic acid | 10 | Na |
| (A-3) | partially neutralized polyacrylic acid | 25 | Na |
| (A-4) | partially neutralized polyacrylic acid | 50 | Na |
| (A-5) | sodium carboxylmethyl cellulose | - | - |

(Table 2)

| Dispersion | Conductive filler | | Dispersant | |
|---|---|---|---|---|
| | Material | Dried material Mass by part | Material | Dried material Mass by part |
| 1 | acetylene black | 70 | A-1 | 30 |
| 2 | acetylene black | 70 | A-2 | 30 |
| 3 | acetylene black | 70 | A-3 | 30 |
| 4 | acetylene black | 70 | A-4 | 30 |
| 5 | acetylene black | 70 | A-5 | 30 |

(Preparation of Base Layer Slurry 1)

30.0 g of resin particulate dispersion of Binder (B-1) having 40.0 wt% of a dried material content (solid concentration) and 100 g of Dispersion 1 were weighed and put into a vessel for stirring. The stirring vessel was attached to a rotation·revolution mixer ARE-310 made by THYNKY, Inc. and then, stirred at 400 rpm for 10 minutes, obtaining Base Layer Slurry 1. After drying Base Layer Slurry 1 into a dried material, as a result of weighing the dried material, a content (solid concentration) of the dried material was about 15% in the base layer slurry.

(Preparation of Base Layer Slurries 2-37)

Base Layer Slurries 2 to 37 were prepared in the same manner as in the aforementioned method (Base layer slurry 1) except that the binder and acetylene black dispersion were weighed to have each composition shown in Table 4. As a result of drying and then, weighing the obtained slurry, the solid concentrations thereof were all about 15%.

<Coating of Base Layer Slurries>

Slurries of Base Layer Compositions 1 to 37 obtained in the aforementioned method were respectively coated on one side of an about 15 μm-thick aluminum foil (A3003-H18). The coating was performed by using a micro gravure coater to form a base layer with a film thickness of 0.5 μm to 2 μm. The drying was performed at 80 °C for 1 minute. Slurries of Base Layer Compositions 8, 13, 18, 22, 31, 33, and 35 were not gravure-coated, which scratched the aluminum foil. Each base layer of these compositions was coated to both sides of the aluminum foil to have a predetermined film thickness and then, dried in a thermostat at 80 °C for 1 minute.

<Performance Evaluation Experiment for Base Layer Slurries>

(Evaluation Method of Coating Property of Base Layer Slurries)

When each slurry of Base Layer Compositions 1 to 37 was coated to have a film thickness of 0.5 $\mu$m to 2 $\mu$m with a gravure coater, the obtained base layers were evaluated with respect to whether or not coated into a target film thickness after the drying. In addition, the base layers were evaluated with naked eyes with respect to whether or not coating defects such as warpage, pinholes, and the like occurred. Specifically, an area of an uncoated portion was visually observed

(Evaluation Criteria for Coating Property of Base Layer Slurries)

When the uncoated portion was less than 10% based on 100% of an area where each slurry for a base layer contacted the current collector foil, O was given. When the uncoated portion was greater than or equal to 10%, X was given. The results are shown in Table 4 below.

(Table 3)

| Binder | Resin |
|---|---|
| (B-1) | styrene-acrylic acid 2-ethylhexyl-based copolymer |
| (B-2) | styrene-acrylic acid butyl-based copolymer |
| (B-3) | styrene-butadiene-based copolymer |

(Table 3-2)

| Binder | Resin | Glass transition temperature (°C) |
|---|---|---|
| (B-1) | styrene-acrylic acid 2-ethylhexyl-based copolymer | 15 |
| (B-4) | styrene-acrylic acid 2-ethylhexyl-based copolymer | 0 |
| (B-5) | styrene-acrylic acid 2-ethylhexyl-based copolymer | -25 |

(Table 4)

| Base layer composition | Binder | | Dispersion | | Gravure printing |
|---|---|---|---|---|---|
| | Material | Dried material Mass by part | Composition | Dried material Mass by part | |
| 1 | (B-1) | 50 | 1 | 50 | ○ |
| 2 | (B-1) | 50 | 2 | 50 | ○ |
| 3 | (B-1) | 50 | 3 | 50 | ○ |
| 4 | (B-1) | 55 | 1 | 45 | ○ |
| 5 | (B-1) | 55 | 2 | 45 | ○ |
| 6 | (B-1) | 55 | 3 | 45 | ○ |
| 7 | (B-1) | 55 | 4 | 45 | ○ |
| 8 | (B-1) | 55 | 5 | 45 | × |
| 9 | (B-1) | 60 | 1 | 40 | ○ |
| 10 | (B-1) | 60 | 2 | 40 | ○ |
| 11 | (B-1) | 60 | 3 | 40 | ○ |
| 12 | (B-1) | 60 | 4 | 40 | ○ |
| 13 | (B-1) | 60 | 5 | 40 | × |
| 14 | (B-1) | 70 | 1 | 30 | ○ |
| 15 | (B-1) | 70 | 2 | 30 | ○ |
| 16 | (B-1) | 70 | 3 | 30 | ○ |

(continued)

| Base layer composition | Binder | | Dispersion | | Gravure printing |
|---|---|---|---|---|---|
| | Material | Dried material Mass by part | Composition | Dried material Mass by part | |
| 17 | (B-1) | 70 | 4 | 30 | ○ |
| 18 | (B-1) | 70 | 5 | 30 | × |
| 19 | (B-1) | 75 | 1 | 25 | ○ |
| 20 | (B-1) | 75 | 2 | 25 | ○ |
| 21 | (B-1) | 75 | 3 | 25 | ○ |
| 22 | (B-1) | 75 | 5 | 25 | × |
| 23 | (B-1) | 80 | 1 | 20 | ○ |
| 24 | (B-1) | 80 | 2 | 20 | ○ |
| 25 | (B-1) | 80 | 3 | 20 | ○ |
| 26 | (B-2) | 70 | 1 | 30 | ○ |
| 27 | (B-2) | 70 | 2 | 30 | ○ |
| 28 | (B-2) | 70 | 3 | 30 | ○ |
| 29 | (B-2) | 70 | 4 | 30 | ○ |
| 30 | (B-3) | 50 | 1 | 50 | ○ |
| 31 | (B-3) | 50 | 5 | 50 | × |
| 32 | (B-3) | 60 | 1 | 40 | ○ |
| 33 | (B-3) | 60 | 5 | 40 | × |
| 34 | (B-3) | 70 | 1 | 30 | ○ |
| 35 | (B-3) | 70 | 5 | 30 | × |

<Manufacture of Positive Electrode Mixed Material Sheet>

(Manufacture of Positive Electrode Mixed Material Sheet 1)

Powders of $LiNi_{0.8}Co_{0.1}Al_{0.1}O_2$, acetylene black, and polytetrafluoro ethylene were weighed in a mass ratio of 93.0:3.5:3.5 and then, kneaded in a mortar for 10 minutes. A massive positive electrode mixed material after the kneading was about 100 times passed through two rolls, manufacturing a positive electrode mixed material sheet with a film thickness of about 150 $\mu$m and density of 2.9 g/cm$^3$ to 3.1 g/cm$^3$. In the process of about 100 times passing the massive positive electrode mixed material through two rolls, a gap between the two rolls was gradually narrowed from 3 mm finally down to about 0.1 mm. The positive electrode mixed material sheet obtained in the method was compressed by using a hot roll press to adjust positive electrode mixed material density of the positive electrode mixed material sheet to 3.6 g/cm$^3$ and a loading amount of a positive electrode mixed material layer to 35.0 mg/cm$^2$. The hot roll was set at a temperature of 40 °C and rotated at a rotation speed of 0.5 m/min. The roll gap was adjusted to 10 $\mu$m, and the positive electrode mixed material sheet with a dimension of 3.0 cm × 8.0 cm was twice passed in a length direction. Subsequently, the roll gap was adjusted to 5 $\mu$m, and the positive electrode mixed material sheet was twice passed. In the compressing process, a total pressure was 0.3 kN, and a linear pressure was 10 kN/m. The positive electrode mixed material sheet was pierced into 15.5 mm$\varphi$, and then, measured with respect to a weight and a film thickness, wherein the film thickness was about 100 $\mu$m, the positive electrode mixed material density was about 3.6 g/cm$^3$, and the loading amount was about 35.0 mg/cm$^2$.

<Manufacture of Positive Electrode>

(Example 1)

The positive electrode mixed material sheet manufactured in the above method was adhered onto a current collector foil by using a hot roll press. Herein, hot rolls were set at a temperature of 60 °C and at a rotation speed of 0.5 m/min. A gap between the rolls was adjusted to 60 $\mu$m, and Positive electrode Mixed Material Sheet 1 was placed on the base layer with a film thickness of 1 $\mu$m (Base Layer Composition 9) coated on the current collector foil and then, once passed through the rolls. On the other hand, a rotation speed condition of the rolls used in each example and comparative example might have an error of about $\pm$ 0.2 m per minute, which had no influence on properties of the positive electrode mixed material sheets. In addition, the roll gap condition used in each example and comparative example might have an error of about $\pm$ 10 $\mu$m, which was particularly not a problem. The adhesion process was performed und a total pressure of 0.3 kN and a linear pressure of 10 kN/m. The positive electrode manufactured as above was dried in a vacuum drier at 80 °C for 6 hours. After the vacuum-drying, the positive electrode was pierced into 15.5 mm$\varphi$ and then, measured with respect to a weight and a film thickness, obtaining a positive electrode mixed material density of about 3.6 g/cm$^3$ and a loading amount of about 35.0 mg/cm$^2$.

(Examples 2 to 27 and Comparative Examples 1 to 23)

Positive electrodes were manufactured in the same method as in Example 1 except that the combination of the base layer and the positive electrode mixed material sheet, the thickness of each layer, and the like were changed as shown in Table 5. The roll gap was adjusted to have a value obtained by the following calculation according to a loading amount of the positive electrode mixed material sheet.

(roll gap) = (loading amount of positive electrode mixed material sheet) + 35 $\times$ 60 $\mu$m

<Performance Evaluation Experiment for Each Positive Electrode of Examples 1 to 27 and Comparative Examples 1 to 23>

(Evaluation Method for Electrode Warpage)

The positive electrodes according to Examples 1 to 27 and Comparative Examples 1 to 23 were pierced into 13 mm$\varphi$ and examined with a digital microscope (VHX5000 manufactured by Keyence Co., Ltd.) and then, evaluates with respect to a warpage degree of the electrodes by making a curl of the positive electrodes. A method of calculating the curl is as follows. A convex portion of the warped positive electrode was facing up and placed on a flat plate horizontally positioned. A maximum distance from the surface of the flat plate to the surface of the positive electrode facing the flat plate was $\Delta Z$, a point on the positive electrode where the maximum distance was measured was A, and a length twice longer than a distance from the flat plate closest to the point A to a contact point of the flat plate with the positive electrode in the horizontal direction was x, which were used according to the following formula (1) to obtain a curl (%).

$$(\text{Curl}) = \Delta Z \div x \times 100\% \ldots (1)$$

(Evaluation Criteria for Electrode Warpage)

As described above, when the obtained curl was less than 10%, positive electrode warpage was evaluated as O. When the obtained curl was greater than or equal to 10%, the positive electrode warpage was evaluated as $\times$. The results are shown in Table 5.

(Evaluation Method of Close Contacting Property of Positive Electrode Mixed Material Layer to Positive Electrode Current Collector)

The positive electrodes according to Examples 1 to 27 and Comparative Examples 1 to 23 were cut into a rectangle with a width of 25 mm and a length of 80 mm. Subsequently, a double-sided adhesive tape was used to attach the surface of the positive electrode mixed material layer of the positive electrode to a stainless steel plate, preparing a sample for evaluating close contacting properties.

The sample for evaluating close contacting properties was mounted in a peeling tester (EZ-S, Shimazu Scientific Instruments) and then, measured with respect to peel strength with a length of 60 mm at 180 ° by setting a peeling speed at 100 mm/min.

(Evaluation Criteria of Close Contacting Property of Positive Electrode Mixed Material Layer to Positive Electrode Current Collector)

When the peel strength was greater than or equal to 4.0 g/mm, the close contacting property was evaluated as ⊚. When greater than or equal to 3.0 g/mm and less than 4.0 g/mm, the close contacting property was evaluated as O, and when less than 3.0 g/mm, the close contacting property was evaluated as ×. The results are shown in Table 5.

(Evaluation Method of Electrode Resistance)

The positive electrodes according to Examples 1 to 27 and Comparative Examples 1 to 23 were measured with respect to electrode interface resistance, which is interface resistance between positive electrode mixed material layers and positive electrode current collectors, by using an electrode resistance measuring device (XF057, Hioki Co., Ltd.). The measurement was performed at a voltage of 5 V and a current of 0.1 mA.

(Evaluation Criteria of Electrode Resistance)

When an interface resistance of an electrode was less than 25% compared with that of Comparative Example 1, ◎ was given. When an interface resistance of an electrode was greater than or equal to 25% and less than 50% compared with that of Comparative Example 1, O was given. The other electrode resistances were evaluated as ×. The results are shown in Table 5.

<Manufacture of Rechargeable Battery Cells>

After welding each positive electrode according to Examples 1 to 27 and Comparative Examples 1 to 23 and a Li metal-pressed copper foil respectively with an aluminum wire and a nickel wire, a polyethylene porous separator was interposed therebetween and then, laminated therewith with one positive electrode and one negative electrode facing each other, manufacturing an electrode laminate. Subsequently, the electrode laminate was housed in an aluminum laminate film with the lead wire pulled out, and, after injecting an electrolyte thereinto, the film was sealed under a reduced pressure, manufacturing a rechargeable battery cell before initial charge. The electrolyte was prepared by dissolving 1.15 M $LiPF_6$ and 1.0 wt% of vinylene carbonate in a mixed solvent of ethylene carbonate/dimethyl carbonate/ethyl methyl carbonate mixed in a volume ratio of 20/20/40.

(Evaluation Method of Resistance Increase during High-temperature Storage)

Each rechargeable battery cell manufactured by using the positive electrodes according to Examples 1 to 27 and Comparative Examples 1 to 23 was one cycle constant current-charged at 0.1 CA, constant voltage-charged at 0.05 CA, and constant current-discharged at 0.1 CA under conditions of charge cut-off voltage of 4.25 V and a discharge cut-off voltage of 3.0 V in a thermostat at 25 °C. Subsequently, the cell was one cycle constant current-charged at 0.2 CA, constant voltage-charged at 0.05 CA, and constant current-discharged at 0.2 CA under conditions of a charge cut-off voltage of 4.25 V and a discharge cut-off voltage of 3.0 V. Then, the cell was constant current-charged at 0.2 CA and constant voltage-charged at 0.05 CA under a condition of a charge cut-off voltage of 4.25 V. In addition, the rechargeable battery cell was made to reach a fullcharge state. The rechargeable battery cell in the full charge was measured with respect to a cell voltage and 1 kHz impedance by using a battery tester and then, stored in the thermostat at 60 °C. The stored rechargeable battery cell in the full charge state was cooled to room temperature at the 1st, 3rd, 7th, and 14th day and then, measured with respect to OCV and 1 kHz impedance by using the battery tester.

(Evaluation Criteria for Resistance Increase during High-temperature Storage)

An increase in resistance during the high-temperature storage was calculated according to the following equation (3).

(Resistance increase during high-temperature storage) = (1 kHz impedance of rechargeable battery cell measured on the 14th day of high-temperature storage) ÷ (1 kHz impedance of rechargeable battery cell measured immediately before high-temperature storage) × 100%... (3)     (3)

When the increase in resistance was less than 120%, ◎ was given. When the increase in resistance was greater than or equal to 120% and less than 150%, O was given. When the increase in resistance was greater than or equal to 150%, × was given. The results are shown in Table 5.

(Evaluation Method of Voltage Drop during High-temperature Storage)

A voltage drop during the high-temperature storage was calculated according to the following equation (4).

(voltage drop during high-temperature storage) = (OCV of rechargeable battery cell measured immediately before high-temperature storage) - (OCV of rechargeable battery cell measured on the 14th day of high-temperature storage) ... (4)    (4)

When the voltage drop was less than 0.08 V, ⊚ was given. When the voltage drop was greater than or equal to 0.08 V and less than 0.1 V, O was given. When the voltage drop was greater than or equal to 0.1 V, × was given. The results are shown in Table 5.

(Table 5)

| | Base layer composition | Binder | | Dispersion | | | | Thickness of base Lay la film (μm) | Loading amount of positive electrode mixture layer (mg/cm²) | Coating properties | Electrode warpage | Close contacting property | Electrode resistance | Resistance increase during hightemperature storage | Voltage drop during hightemperature storage |
|---|---|---|---|---|---|---|---|---|---|---|---|---|---|---|---|
| | | Material | Dried material Mass by part | Conductive filler | Dispersant | Neutralization degree (%) | Dried material Mass by part | | | | | | | | |
| Ex.1 | 9 | B-1 | 60 | Acetylene black | A-1 | 0 | 40 | 1 | 35.0 | ○ | ○ | ◎ | ◎ | ◎ | ◎ |
| Ex.2 | 9 | B-1 | 60 | " | A-1 | 0 | 40 | 1 | 37.5 | ○ | ○ | ◎ | ◎ | ◎ | ◎ |
| Ex.3 | 9 | B-1 | 60 | " | A-1 | 0 | 40 | 1 | 40.0 | ○ | ○ | ◎ | ◎ | ◎ | ◎ |
| Ex.4 | 9 | B-1 | 60 | " | A-1 | 0 | 40 | 1 | 45.0 | ○ | ○ | ◎ | ◎ | ◎ | ◎ |
| Ex.5 | 9 | B-1 | 60 | " | A-1 | 0 | 40 | 1 | 50.0 | ○ | ○ | ◎ | ◎ | ◎ | ◎ |
| Ex.6 | 9 | B-1 | 60 | " | A-1 | 0 | 40 | 1 | 30.0 | ○ | ○ | ◎ | ◎ | ◎ | ◎ |
| Ex.7 | 9 | B-1 | 60 | " | A-1 | 0 | 40 | 1 | 32.5 | ○ | ○ | ◎ | ◎ | ◎ | ◎ |
| Ex.8 | 9 | B-1 | 60 | " | A-1 | 0 | 40 | 0.5 | 35.0 | ○ | ○ | ◎ | ◎ | ◎ | ◎ |
| Ex.9 | 9 | B-1 | 60 | " | A-1 | 0 | 40 | 0.7 | 35.0 | ○ | ○ | ◎ | ◎ | ◎ | ◎ |
| Ex.10 | 9 | B-1 | 60 | " | A-1 | 0 | 40 | 1.5 | 35.0 | ○ | ○ | ◎ | ◎ | ◎ | ◎ |
| Ex.11 | 9 | B-1 | 60 | " | A-1 | 0 | 40 | 2 | 35.0 | ○ | ○ | ◎ | ◎ | ◎ | ◎ |
| Ex.12 | 1 | B-1 | 50 | " | A-1 | 0 | 50 | 1 | 35.0 | ○ | ○ | ○ | ◎ | ◎ | ◎ |
| Ex.13 | 2 | B-1 | 50 | " | A-2 | 10 | 50 | 1 | 35.0 | ○ | ○ | ○ | ◎ | ◎ | ◎ |
| Ex.14 | 3 | B-1 | 50 | " | A-3 | 25 | 50 | 1 | 35.0 | ○ | ○ | ○ | ◎ | ○ | ○ |
| Ex.15 | 4 | B-1 | 55 | " | A-1 | 0 | 45 | 1 | 35.0 | ○ | ○ | ◎ | ◎ | ◎ | ◎ |
| Ex.16 | 5 | B-1 | 55 | " | A-2 | 10 | 45 | 1 | 35.0 | ○ | ○ | ◎ | ◎ | ◎ | ◎ |
| Ex.17 | 6 | B-1 | 55 | " | A-3 | 25 | 45 | 1 | 35.0 | ○ | ○ | ◎ | ◎ | ○ | ○ |

(continued)

| | Base layer composition | Binder Material | Binder Dried material Mass by part | Conductive filler | Dispersion Dispersant | Dispersion Neutralization degree (%) | Dispersion Dried material Mass by part | Thickness of base Layer film (μm) | Loading amount of positive electrode mixture layer (mg/cm²) | Coating properties | Electrode warpage | Close contacting property | Electrode resistance | Resistance increase during high temperature storage | Voltage drop during high temperature storage |
|---|---|---|---|---|---|---|---|---|---|---|---|---|---|---|---|
| Ex.18 | 10 | B-1 | 60 | " | A-2 | 10 | 40 | 1 | 35.0 | ○ | ○ | ◎ | ◎ | ◎ | ◎ |
| Ex.19 | 11 | B-1 | 60 | " | A-3 | 25 | 40 | 1 | 35.0 | ○ | ○ | ◎ | ◎ | ○ | ○ |
| Ex.20 | 14 | B-1 | 70 | " | A-1 | 0 | 30 | 1 | 35.0 | ○ | ○ | ◎ | ◎ | ◎ | ◎ |
| Ex.21 | 15 | B-1 | 70 | " | A-2 | 10 | 30 | 1 | 35.0 | ○ | ○ | ◎ | ◎ | ◎ | ◎ |
| Ex.22 | 16 | B-1 | 70 | " | A-3 | 25 | 30 | 1 | 35.0 | ○ | ○ | ◎ | ◎ | ○ | ○ |
| Ex.23 | 19 | B-1 | 75 | " | A-1 | 0 | 25 | 1 | 35.0 | ○ | ○ | ◎ | ○ | ◎ | ◎ |
| Ex.24 | 20 | B-1 | 75 | " | A-2 | 10 | 25 | 1 | 35.0 | ○ | ○ | ◎ | ○ | ◎ | ◎ |
| Ex.25 | 21 | B-1 | 75 | " | A-3 | 25 | 25 | 1 | 35.0 | ○ | ○ | ◎ | ○ | ○ | ○ |
| Ex.26 | 26 | B-2 | 70 | " | A-1 | 0 | 30 | 1 | 35.0 | ○ | ○ | ◎ | ◎ | ○ | ○ |
| Ex.27 | 27 | B-2 | 70 | " | A-2 | 10 | 30 | 1 | 35.0 | ○ | ○ | ◎ | ◎ | ○ | ○ |
| Ex.28 | 28 | B-2 | 70 | " | A-3 | 25 | 30 | 1 | 35.0 | ○ | ○ | ◎ | ◎ | ○ | ○ |
| Ex.29 | 36 | B-4 | 60 | " | A-1 | 0 | 40 | 1 | 35.0 | ○ | ○ | ◎ | ◎ | ◎ | ◎ |
| Comp. Ex.1 | - | - | - | - | - | - | - | - | 35.0 | - | ○ | × | × | × | × |
| Comp. Ex.2 | 23 | B-1 | 80 | " | A-1 | 0 | 20 | 1 | 35.0 | ○ | × | ◎ | × | ◎ | ◎ |
| Comp. Ex.3 | 24 | B-1 | 80 | " | A-2 | 10 | 20 | 1 | 35.0 | ○ | × | ◎ | × | ◎ | ◎ |
| Comp. Ex.4 | 25 | B-1 | 80 | " | A-3 | 25 | 20 | 1 | 35.0 | ○ | × | ◎ | × | ○ | ○ |

| Base layer composition | Binder | | Dispersion | | | | Thickness of base Lay la film (μm) | Loading amount of positive electrode mixture layer (mg/cm²) | Coating properties | Electrode warpage | Close contacting property | Electrode resistance | Resistance increase during high temperature storage | Voltage drop during high temperature storage |
|---|---|---|---|---|---|---|---|---|---|---|---|---|---|---|
| | Material | Dried material Mass by part | Conductive filler | Dispersant | Neutralization degree (%) | Dried material Mass by part | | | | | | | | |
| Comp. Ex.5 — 7 | B-1 | 55 | " | A-4 | 50 | 45 | 1 | 35.0 | ○ | ○ | ◎ | ◎ | × | × |
| Comp. Ex.6 — 12 | B-1 | 60 | " | A-4 | 50 | 40 | 1 | 35.0 | ○ | ○ | ◎ | ◎ | × | × |
| Comp. Ex.7 — 17 | B-1 | 70 | " | A-4 | 50 | 30 | 1 | 35.0 | ○ | ○ | ◎ | ◎ | × | × |
| Comp. Ex.8 — 29 | B-2 | 70 | " | A-4 | 50 | 30 | 1 | 35.0 | ○ | ○ | ◎ | ◎ | × | × |
| Comp. Ex.9 — 8 | B-1 | 55 | " | A-5 | - | 45 | 1 | 35.0 | × | ○ | ◎ | ◎ | ◎ | ◎ |
| Comp. Ex.10 — 13 | B-1 | 60 | " | A-5 | - | 40 | 1 | 35.0 | × | ○ | ◎ | ◎ | ◎ | ◎ |
| Comp. Ex.11 — 18 | B-1 | 70 | " | A-5 | - | 30 | 1 | 35.0 | × | ○ | ◎ | ◎ | ◎ | ◎ |
| Comp. Ex.12 — 22 | B-1 | 75 | " | A-5 | - | 25 | 1 | 35.0 | × | ○ | ◎ | ○ | ◎ | ◎ |
| Comp. Ex.13 — 31 | B-3 | 50 | " | A-1 | 0 | 50 | 1 | 35.0 | ○ | ○ | × | ◎ | × | × |
| Comp. Ex.14 — 31 | B-3 | 50 | " | A-5 | - | 50 | 1 | 35.0 | × | ○ | × | ◎ | × | × |
| Comp. Ex.15 — 32 | B-3 | 60 | " | A-1 | 0 | 40 | 1 | 35.0 | ○ | ○ | × | ◎ | × | × |

EP 4 254 567 B1

(continued)

| | Base layer composition | Binder | | Dispersion | | | | Thickness of base Lay la film (μm) | Loading amount of positive electrode mixture layer (mg/cm$^2$) | Coating properties | Electrode warpage | Close contacting property | Electrode resistance | Resistance increase during hightemperature storage | Voltage drop during hightemperature storage |
|---|---|---|---|---|---|---|---|---|---|---|---|---|---|---|---|
| | | Material | Dried material Mass by part | Conductive filler | Dispersant | Neutralization degree (%) | Dried material Mass by part | | | | | | | | |
| Comp. Ex.16 | 32 | B-3 | 60 | " | A-1 | 0 | 40 | 2 | 35.0 | ○ | ○ | × | ◎ | × | × |
| Comp. Ex. 17 | 33 | B-3 | 60 | " | A-5 | - | 40 | 1 | 35.0 | × | ○ | × | ◎ | × | × |
| Comp. Ex. 18 | 33 | B-3 | 60 | " | A-5 | - | 40 | 2 | 35.0 | × | ○ | × | ◎ | × | × |
| Comp. Ex.19 | 34 | B-3 | 70 | " | A-1 | 0 | 30 | 1 | 35.0 | ○ | ○ | × | ◎ | × | × |
| Comp. Ex.20 | 34 | B-3 | 70 | " | A-1 | 0 | 30 | 2 | 35.0 | ○ | ○ | × | ◎ | × | × |
| Comp. Ex.21 | 35 | B-3 | 70 | " | A-5 | - | 30 | 1 | 35.0 | × | ○ | × | ◎ | × | × |
| Comp. Ex.22 | 35 | B-3 | 70 | " | A-5 | - | 30 | 2 | 35.0 | × | ○ | × | ◎ | × | × |
| Comp. Ex.23 | 37 | B-5 | 60 | " | A-1 | 0 | 40 | 1 | 35.0 | ○ | ○ | × | ○ | ○ | ○ |

<Consideration of Evaluation Results>

Referring to the results of Table 5, Examples 1 to 29 having a base layer according to the present invention, wherein the base layer had a sufficiently small thickness of greater than or equal to 0.5 $\mu$m and less than or equal to 2 $\mu$m, provided a positive electrode having significantly improved close contacting property and sufficiently small electrode plate resistance, compared with Comparative Example 1, even though a positive electrode mixed material layer had a sufficiently large loading amount of greater than or equal to 30 mg/cm$^2$. Since the base layer is made of an inactive material neither intercalating nor deintercalating lithium ions, thick coating thereof becomes disadvantageous in terms of improving volume energy density and weight energy density. In this respect, the base layers used in Examples 1 to 29 of the present invention were a thin film and thus advantageous in terms of improving the energy density. In addition, according to Examples 1 to 29, when stored at a high temperature, the rechargeable battery cells were sufficiently suppressed from a resistance increase or a voltage drop caused by the detachment or peeling of positive electrode mixed material layers during the high-temperature storage.

On the other hand, as shown in Table 6, each rechargeable battery cell, which was manufactured in the same manner as in Example 1 except that the loading amount of the positive electrode mixed material layer was changed into 25 mg/cm$^2$, 60 mg/cm$^2$, or 70 mg/cm$^2$, exhibited all the same very excellent coating property, electrode warpage, close contacting property, and electrode plate resistance as in Example 1. In addition, these rechargeable battery cells were all the same sufficiently suppressed from a resistance increase during the high-temperature storage or a voltage drop during the high-temperature storage as in Example 1.

(Table 6)

| | Base layer composition | Binder | | Dispersion | | | | Thickness of base | Loading amount of positive electrode mixture layer (mg/cm$^2$) | Coating properties | Electrode warpage | Close contacting property | Electrode resistance |
|---|---|---|---|---|---|---|---|---|---|---|---|---|---|
| | | Material | Dried material Mass by part | Conductive filler | Dispersant | Neutralization degree (%) | Dried material Mass by part | | | | | | |
| Ex.30 | 9 | B-1 | 60 | acetylene black | A-1 | 0 | 40 | 1 | 25.0 | ○ | ○ | ◎ | ◎ |
| Ex.31 | 9 | B-1 | 60 | acetylene black | A-1 | 0 | 40 | 1 | 60.0 | ○ | ○ | ◎ | ◎ |
| Ex.32 | 9 | B-1 | 60 | acetylene black | A-1 | 0 | 40 | 1 | 70.0 | ○ | ○ | ◎ | ◎ |

Comparing Examples 1 to 29 with Comparative Examples 13 to 22, an acrylic acid ester-based copolymer turned out to be desirable as a binder for a base layer. Although not described here, compared with the cases manufactured in the same manner as in Example 1 except that the content of the acrylic acid ester-based copolymer was 40 wt%, Examples 1 to 27 exhibited a high close-contacting force. Referring to the results, when greater than or equal to 45 wt% of the content of the acrylic acid ester-based copolymer was used in the base layer, the detachment or peeling off of the positive electrode mixed material layer was sufficiently suppressed, and high close contacting property was obtained.

In addition, comparing Examples 1 to 27 and Comparative Examples 2 to 4, less than or equal to 77.5 wt% of the content of the acrylic acid ester-based copolymer in the base layer turned out to suppress generation of electrode warpage. Comparing Example 4 with Example 13, a base layer having greater than or equal to 60 wt% of the content of the acrylic acid ester-based copolymer turned out to much improve the close contacting property. In addition, comparing Examples 1 to 29 with Comparative Examples 9 to 12, 14, 17, 18, 21, and 22, coating property of a base layer using polyacrylic acid as a dispersant turned out to be improved.

In addition, comparing Examples 1 to 29 with Comparative Examples 5 to 8, since polyacrylic acid used as a dispersant had a neutralization ratio of less than or equal to 25%, an increase in resistance or a voltage drop was sufficiently suppressed during the high-temperature storage. Comparing Examples 13 with 14, Example 15, Example 16 with Example 17, or Examples 21 and 23 with Example 22, the neutralization ratio of less than or equal to 10% was more desirable.

In addition, referring to the results of Examples 1 and 29 and Comparative Example 23, when a binder for a base layer had a glass transition temperature of greater than or equal to about -20 °C and less than or equal to about 15 °C, an increase in resistance or a voltage drop was sufficiently suppressed during the high-temperature storage.

On the other hand, each rechargeable battery cell manufactured in the same manner as in Example 1, except that the roll temperature during the hot roll press to manufacture the positive electrode mixed sheet was set to the conditions shown in Table 7, all exhibited sufficient coating property of the base layer, no electrode warpage, and sufficient close contacting property and thus suppressed electrode plate resistance to a low level. In addition, each of these rechargeable battery cells turned out to be sufficiently suppressed from an increase in resistance during the high-temperature storage or a voltage drop during the low temperature storage in the same manner as in Example 1.

(Table 7)

| | Base layer composition | Roll temperature (°C) | Roll rotation speed (m/min) | Loading amount of positive electrode mixture layer (mg/cm$^2$) | Coating properties | Electrode warpage | Close contacting property | Electrode resistance | Resistance increase during hightemperature storage | Voltage drop during hightemperature storage |
|---|---|---|---|---|---|---|---|---|---|---|
| Ex.1 | 9 | 60 | 0.5 | 35.0 | ○ | ○ | ◎ | ◎ | ◎ | ◎ |
| Ex.33 | 9 | 40 | 0.5 | 35.0 | ○ | ○ | ◎ | ◎ | ◎ | ◎ |
| Ex.34 | 9 | 80 | 0.5 | 35.0 | ○ | ○ | ◎ | ◎ | ◎ | ◎ |

In addition, each rechargeable battery cell manufactured in the same manner as in Example 1, except that the roll temperature and the roll speed during the hot roll press for manufacturing a positive electrode mixed sheet were set to conditions shown in Table 8, exhibited sufficient coating property of a base layer, no electrode warpage, and sufficient close contacting property and thus were suppressed from electrode plate resistance to a low level. In addition, each of these rechargeable battery cells turned out to sufficiently suppress an increase in resistance during the high-temperature storage or a voltage drop during the low temperature storage in the same manner as in Example 1.

(Table 8)

| | Base layer composition | Roll temperature (°C) | Roll rotation speed (m/min) | Loading amount of positive electrode mixture layer (mg/cm$^2$) | Coating properties | Electrode warpage | Close contacting property | Electrode resistance |
|---|---|---|---|---|---|---|---|---|
| Ex. 35 | 9 | 40 | 0.1 | 35.0 | ○ | ○ | ◎ | ◎ |

(continued)

| | Base layer composition | Roll temperature (°C) | Roll rotation speed (m/min) | Loading amount of positive electrode mixture layer (mg/cm$^2$) | Coating properties | Electrode warpage | Close contacting property | Electrode resistance |
|---|---|---|---|---|---|---|---|---|
| Ex. 36 | 9 | 40 | 1 | 35.0 | ○ | ○ | ◎ | ◎ |
| Ex. 37 | 9 | 60 | 0.1 | 35.0 | ○ | ○ | ◎ | ◎ |
| Ex. 38 | 9 | 60 | 1 | 35.0 | ○ | ○ | ◎ | ◎ |
| Ex. 39 | 9 | 80 | 0.1 | 35.0 | ○ | ○ | ◎ | ◎ |
| Ex. 40 | 9 | 80 | 1 | 35.0 | ○ | ○ | ◎ | ◎ |

## Claims

1. An electrode for a non-aqueous electrolyte rechargeable battery, comprising

   a current collector,
   an electrode mixed material layer, and
   a conductive base layer between the current collector and the electrode mixed material layer,
   wherein the base layer includes a styrene-acrylic acid ester-based copolymer, a carbon material, and polyacrylic acid,
   a content of the styrene-acrylic acid ester-based copolymer is greater than or equal to 45 wt% and less than or equal to 77.5 wt% based on 100 wt% of the base layer,
   in the polyacrylic acid, a carboxy group is not neutralized or a ratio of a neutralized carboxy group neutralized by alkali metal ions among the carboxy groups is greater than 0 mol% and less than or equal to 25 mol% based on 100 mol% of the carboxy groups, and
   a loading amount of the electrode mixed material layer per one surface of the current collector is greater than or equal to 15 mg/cm$^2$ and less than or equal to 70 mg/cm$^2$.

2. The electrode of claim 1, wherein
   the loading amount of the electrode mixed material layer per one surface of the current collector is greater than or equal to 25 mg/cm$^2$ and less than or equal to 70 mg/cm$^2$.

3. The electrode of claim 1 or 2, wherein
   the loading amount of the electrode mixed material layer per one surface of the current collector is greater than or equal to 30 mg/cm$^2$ and less than or equal to 50 mg/cm$^2$.

4. The electrode of claims 1 to 3, wherein
   the base layer has a thickness of greater than or equal to 0.5 $\mu$m and less than or equal to 5 $\mu$m.

5. The electrode of claims 1 to 4, wherein
   the base layer has a thickness of greater than or equal to 0.5 $\mu$m and less than or equal to 2 $\mu$m.

6. The electrode of claims 1 to 5, wherein
   a glass transition temperature of the styrene-acrylic acid ester-based copolymer is greater than or equal to -20 °C and less than or equal to 15 °C.

7. The electrode of claims 1 to 6, wherein
   the electrode mixed material layer further includes polytetrafluoroethylene in an amount of greater than or equal to 0.5 wt% and less than or equal to 10 wt%.

8. The electrode of claims 1 to 7, wherein
   the polyacrylic acid has no neutralized carboxy group, or a ratio of the neutralized carboxy group in the polyacrylic acid is greater than 0 mol% and less than or equal to 10 mol% based on 100 mol% of the carboxy groups.

9. The electrode of claims 1 to 8, wherein
a content of the styrene-acrylic acid ester-based copolymer is greater than or equal to 60 wt% and less than or equal to 70 wt% based on 100 wt% of the base layer.

10. The electrode of claims 1 to 9, wherein
the carbon material is at least one selected from furnace black, channel black, thermal black, ketjen black, and acetylene black.

11. A non-aqueous electrolyte rechargeable battery, comprising.

the electrode of any one of claim 1 to claim 10 as a positive electrode,
a negative electrode,
a separator between the positive electrode and negative electrode, and an electrolyte.


**Patentansprüche**

1. Elektrode für eine wiederaufladbare Batterie mit nichtwässrigem Elektrolyt, umfassend

einen Stromabnehmer,
eine Elektroden-Mischmaterialschicht und
eine leitfähige Basisschicht zwischen dem Stromabnehmer und der Elektroden-Mischmaterialschicht,
wobei die Basisschicht ein Copolymer auf Styrol-Acrylsäureester-Basis, ein Kohlenstoffmaterial und Polyacrylsäure enthält,
ein Gehalt an dem Copolymer auf Styrol-Acrylsäureester-Basis größer als oder gleich 45 Gew.-% und kleiner als oder gleich 77,5 Gew.-% bezogen auf 100 Gew.-% an der Basisschicht ist,
in der Polyacrylsäure eine Carboxygruppe nicht neutralisiert ist oder ein Anteil einer neutralisierten Carboxygruppe, neutralisiert durch Alkalimetallionen, an den Carboxygruppen größer als 0 mol-% und kleiner als oder gleich 25 mol-% bezogen auf 100 mol-% an den Carboxygruppen ist und
eine Beladungsmenge der Elektroden-Mischmaterialschicht pro Flächeneinheit des Stromabnehmers größer als oder gleich 15 mg/cm$^2$ und kleiner als oder gleich 70 mg/cm$^2$ ist.

2. Elektrode nach Anspruch 1, wobei
die Beladungsmenge der Elektroden-Mischmaterialschicht pro Flächeneinheit des Stromabnehmers größer als oder gleich 25 mg/cm$^2$ und kleiner als oder gleich 70 mg/cm$^2$ ist.

3. Elektrode gemäß Anspruch 1 oder 2, wobei
die Beladungsmenge der Elektroden-Mischmaterialschicht pro Flächeneinheit des Stromabnehmers größer als oder gleich 30 mg/cm$^2$ und kleiner als oder gleich 50 mg/cm$^2$ ist.

4. Elektrode gemäß Ansprüchen 1 bis 3, wobei
die Basisschicht eine Dicke von größer als oder gleich 0,5 $\mu$m und kleiner als oder gleich 5 $\mu$m aufweist.

5. Elektrode gemäß Ansprüchen 1 bis 4, wobei
die Basisschicht eine Dicke von größer als oder gleich 0,5 $\mu$m und kleiner als oder gleich 2 $\mu$m aufweist.

6. Elektrode gemäß Ansprüchen 1 bis 5, wobei
eine Glasübergangstemperatur des Copolymers auf Styrol-Acrylsäureester-Basis höher als oder gleich -20 °C und kleiner als oder gleich 15 °C ist.

7. Elektrode gemäß Ansprüchen 1 bis 6, wobei
die Elektroden-Mischmaterialschicht ferner Polytetrafluorethylen in einer Menge von größer als oder gleich 0,5 Gew.-% und kleiner als oder gleich 10 Gew.-% enthält.

8. Elektrode gemäß Ansprüchen 1 bis 7, wobei
die Polyacrylsäure keine neutralisierte Carboxygruppe aufweist oder ein Anteil der neutralisierten Carboxygruppe in der Polyacrylsäure größer als 0 mol-% und kleiner als oder gleich 10 mol-% bezogen auf 100 mol-% an den Carboxygruppen ist.

9. Elektrode gemäß Ansprüchen 1 bis 8, wobei

   ein Gehalt an dem Copolymer auf Styrol-Acrylsäureester-Basis größer als oder gleich 60 Gew.-% und kleiner als oder gleich 70 Gew.-% bezogen auf 100 Gew.-% an der Basisschicht ist.

10. Elektrode gemäß Ansprüchen 1 bis 9, wobei

    das Kohlenstoffmaterial wenigstens eines ausgewählt aus Ofenruß, Kanalruß, thermischem Ruß, Ketjen-Ruß und Acetylenruß ist.

11. Wiederaufladbare Batterie mit nichtwässrigem Elektrolyt, umfassend

    die Elektrode gemäß einem von Anspruch 1 bis Anspruch 10 als positive Elektrode,
    eine negative Elektrode,
    einen Separator zwischen der positiven Elektrode und der negativen Elektrode und
    einen Elektrolyt.

**Revendications**

1. Électrode pour une batterie rechargeable à électrolyte non aqueux, comprenant

   un collecteur de courant,
   une couche de matériau mixte d'électrode, et une couche de base conductrice entre le collecteur de courant et la couche de matériau mixte d'électrode,
   la couche de base comportant un copolymère à base de styrène-ester d'acide acrylique, un matériau de carbone, et un poly(acide acrylique),
   une teneur du copolymère à base de styrène-ester d'acide acrylique étant supérieure ou égale à 45 % en poids et inférieure ou égale à 77,5 % en poids sur la base de 100 % en poids de la couche de base,
   dans le poly(acide acrylique), un groupe carboxy n'étant pas neutralisé ou un rapport d'un groupe carboxy neutralisé neutralisé par des ions de métaux alcalins parmi les groupes carboxy étant supérieur à 0 % en moles et inférieur ou égal à 25 % en moles sur la base de 100 % en moles des groupes carboxy, et
   une quantité de chargement de la couche de matériau mixte d'électrode par une surface du collecteur de courant étant supérieure ou égale à 15 mg/cm$^2$ et inférieure ou égale à 70 mg/cm$^2$.

2. Électrode selon la revendication 1,
   la quantité de chargement de la couche de matériau mixte d'électrode par une surface du collecteur de courant étant supérieure ou égale à 25 mg/cm$^2$ et inférieure ou égale à 70 mg/cm$^2$.

3. Électrode selon la revendication 1 ou 2,
   la quantité de chargement de la couche de matériau mixte d'électrode par une surface du collecteur de courant étant supérieure ou égale à 30 mg/cm$^2$ et inférieure ou égale à 50 mg/cm$^2$.

4. Électrode selon les revendications 1 à 3,
   la couche de base ayant une épaisseur supérieure ou égale à 0,5 $\mu$m et inférieure ou égale à 5 $\mu$m.

5. Électrode selon les revendications 1 à 4,
   la couche de base ayant une épaisseur supérieure ou égale à 0,5 $\mu$m et inférieure ou égale à 2 $\mu$m.

6. Électrode selon les revendications 1 à 5,
   une température de transition vitreuse du copolymère à base de styrène-ester d'acide acrylique étant supérieure ou égale à -20 °C et inférieure ou égale à 15 °C.

7. Électrode selon les revendications 1 à 6,
   la couche de matériau mixte d'électrode comportant en outre du polytétrafluoroéthylène en une quantité supérieure ou égale à 0,5 % en poids et inférieure ou égale à 10 % en poids.

8. Électrode selon les revendications 1 à 7,
le poly(acide acrylique) n'ayant pas de groupe carboxy neutralisé, ou un rapport du groupe carboxy neutralisé dans le poly(acide acrylique) étant supérieur à 0 % en moles et inférieur ou égal à 10 % en moles sur la base de 100 % en moles des groupes carboxy.

9. Électrode selon les revendications 1 à 8,
une teneur du copolymère à base de styrène-ester d'acide acrylique étant supérieure ou égale à 60 % en poids et inférieure ou égale à 70 % en poids sur la base de 100 % en poids de la couche de base.

10. Électrode selon les revendications 1 à 9,
le matériau de carbone étant au moins l'un choisi parmi du noir de fourneau, le noir de tunnel, le noir thermique, le noir ketjen et le noir d'acétylène.

11. Batterie rechargeable à électrolyte non aqueux, comprenant

l'électrode selon l'une quelconque parmi la revendication 1 à la revendication 10 en tant qu'électrode positive,
une électrode négative,
un séparateur entre l'électrode positive et l'électrode négative, et
un électrolyte.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020196372 A